(19) Europäisches Patentamt

European Patent Office

Office européen des brevets

(11) **EP 0 940 963 B1**

(12) **EUROPEAN PATENT SPECIFICATION**

(45) Date of publication and mention
of the grant of the patent:
**02.08.2006 Bulletin 2006/31**

(51) Int Cl.:
*H04M 1/72* (2006.01)

(21) Application number: **99102881.2**

(22) Date of filing: **04.03.1999**

(54) **Power supply apparatus and method for mobile communication terminal**

Stromversorgungseinrichtung und Verfahren für ein mobiles Fernsprech- Endgerät

Procédé et appareil d'alimentation électrique pour un terminal mobile de communication

(84) Designated Contracting States:
**DE FR GB**

(30) Priority: **05.03.1998 KR 9807288**

(43) Date of publication of application:
**08.09.1999 Bulletin 1999/36**

(73) Proprietor: **SAMSUNG ELECTRONICS CO., LTD.**
**Suwon-City, Kyungki-do (KR)**

(72) Inventor: **Park, Jae-Sun**
**Suwon-shi,**
**Kyonggi-do (KR)**

(74) Representative: **Grünecker, Kinkeldey,**
**Stockmair & Schwanhäusser**
**Anwaltssozietät**
**Maximilianstrasse 58**
**80538 München (DE)**

(56) References cited:
**EP-A- 0 740 386         DE-A- 4 310 601**
**GB-A- 2 313 741         US-A- 5 239 695**
**US-A- 5 566 201         US-A- 5 655 220**
**US-A- 5 675 245**

**Description**

The present invention relates to a power supply apparatus and method for a mobile communication terminal, and in particular, to a power supply apparatus and method which is favorable for a reduction in size and an increase in power efficiency of a mobile communication terminal.

A mobile communication terminal such as a CDMA (Code Division Multiple Access) terminal and a GSM (Global System for Mobile communication) terminal, employs a rechargeable battery for providing the mobile communication terminal with a power supply voltage. A power supply apparatus of the mobile communication terminal includes DC/DC converters for converting a DC voltage provided from the battery to several operating voltages for each part of the mobile communication terminal.

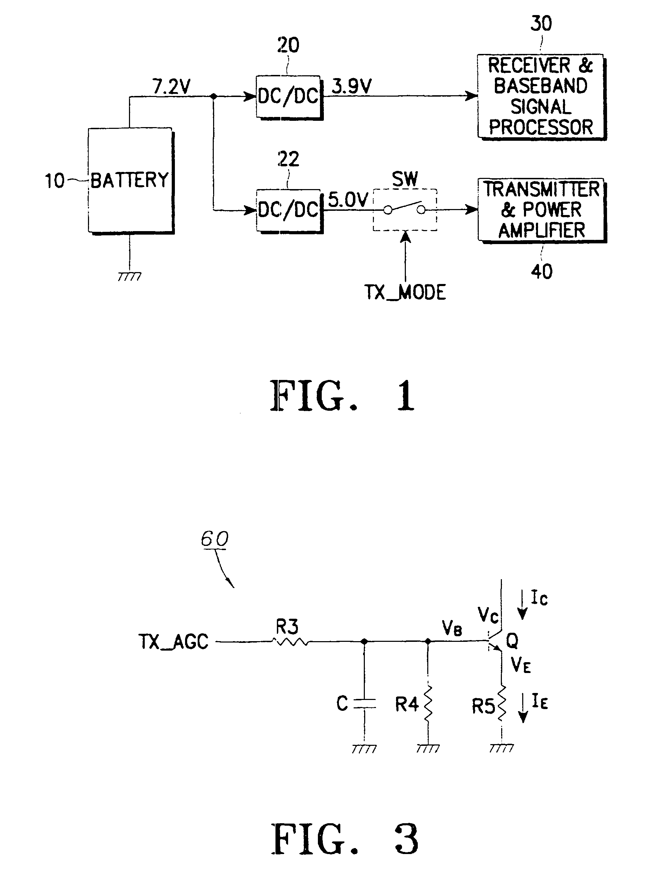

FIG. 1 illustrates a conventional power supply apparatus for a mobile communication terminal. As illustrated, the power supply apparatus down-converts (or steps down) a DC voltage 7.2V provided from a battery 10 to a DC voltage 3.9V for a receiver and baseband signal processor 30 and to a DC voltage 5.0V for a transmitter and power amplifier 40. To this end, the conventional power supply apparatus includes a DC/DC converter 20 for converting the DC voltage 7.2V supplied from the battery 10 to the DC voltage 3.9V for the receiver and baseband signal processor 30, and a DC/DC converter 22 for converting the DC voltage 7.2V supplied from the battery 10 to the DC voltage 5.0V for the transmitter and power amplifier 40. Here, the DC voltage output from the DC/DC converter 22 is provided to the transmitter and power amplifier 40 by way of a switch SW, in order to provide the converted DC voltage output from the DC/DC converter 22 to the transmitter and power amplifier 40 only in a transmission mode so that the power consumption may be reduced in a reception mode. In this manner, the mobile communication terminal reduces The overall power consumption and extends the battery life.

However, the conventional power supply apparatus includes several DC/DC converters, which is disadvantageous to a reduction in size of the mobile communication terminal.

US-A-5 655 220 relates to power control in a radiotelephone system. It is suggested to enable a radiotelephone to operate in a linear fashion over a wide dynamic range while maintaining acceptable transmit output power levels inside and outside of the return link bandwidth. The forward and return link power are measured by power detectors and input to an analog to digital converter accessible by both control hardware and/or software. The closed loop power control setting is also monitored. The radio telephone uses the detected power levels and closed loop power control setting to index a set of correction tables that indicate the reverse link transmit power error and desired power amplifier biasing for the particular operating point. The radiotelephone also determines if the transmitter is operating above a maximum set point. The transmitter gain and power amplifier biasing of the radiotelephone are adjusted to correct the undesired error and maintain the desired output power.

GB-A-2 313 741 suggests reducing a peak current drawn from a battery in a communication device by selectively switching parts of the device during transmission and reception of radio frequency signals, which allows for operating a voltage converter connected to the battery within its region of maximum efficiency. Switches are used to remove operating power from a display during transmit and receive time slots without it being perceptible to a user, and for providing operating power to a transmit circuit and received circuit only during respective transmit and receive time slots.

It is the object of the present invention to provide an improved method and apparatus for controlling a power supply voltage in a mobile communication terminal.

The object is solved by the subject matter of the independent claims.

Preferred embodiments of the present invention are defined by the dependent claims.

It is an aspect of the present invention to provide a compact power supply apparatus and method which is favorable for a reduction in size of a mobile communication terminal.

It is another aspect of the present invention to provide a power supply apparatus and method for maximizing a power efficiency of a mobile communication terminal.

It is still another aspect of the present invention to provide a power supply apparatus and method for extending a battery life of a mobile communication terminal.

According to an embodiment of the present invention, there is provided a power supply apparatus for a mobile communication terminal including a transmitter and baseband signal processor, a transmitter and a power amplifier. The power supply apparatus includes a DC/DC converter for converting a DC voltage from a battery. In a reception mode of the mobile communication terminal, the power supply apparatus regulates the DC voltage converted by the DC/DC converter and supplies the regulated DC voltage to the receiver and baseband signal processor. In a transmission mode, the power supply apparatus converts the DC voltage converted by the DC/DC converter to a DC voltage corresponding to a transmission AGC (Automatic Gain Control) voltage determined depending on a transmission power and supplies the converted DC voltage to the receiver and baseband signal processor, the transmitter and the power amplifier.

The power supply apparatus uses a single DC/DC converter and adaptively varies the output voltage of the DC/DC converter according to the transmission power in the transmission mode. Therefore, the power supply apparatus is favorable for a reduction in size of the mobile communication terminal and for a reduction in power loss of the voltage regulators and the power amplifier, thereby maximizing the power efficiency and extending the battery life.

## BRIEF DESCRIPTION OF THE DRAWINGS

The above and other objects, features and advantages of the present invention will become more apparent from the following detailed description when taken in conjunction with the accompanying drawings in which like reference numerals indicate like parts. In the drawings:

FIG. 1 is a block diagram illustrating a conventional power supply apparatus for a mobile communication terminal;
FIG. 2 is a block diagram illustrating a power supply apparatus for a mobile communication terminal according to an embodiment of the present invention;
FIG. 3 is a detailed circuit diagram of a power control current source (60) of FIG. 2;
FIGs. 4A through 4C are diagrams illustrating output characteristics of a power amplifier (44) provided with the power supply voltage according to an embodiment of the present invention; and
FIG. 5 is a block diagram illustrating a common mobile communication terminal to which the present invention is applied.

## DETAILED DESCRIPTION OF THE PREFERRED EMBODIMENT

A preferred embodiment of the present invention will be described hereinbelow with reference to the accompanying drawings. In the following description, well known functions or constructions are not described in detail since they would obscure the invention in unnecessary detail.

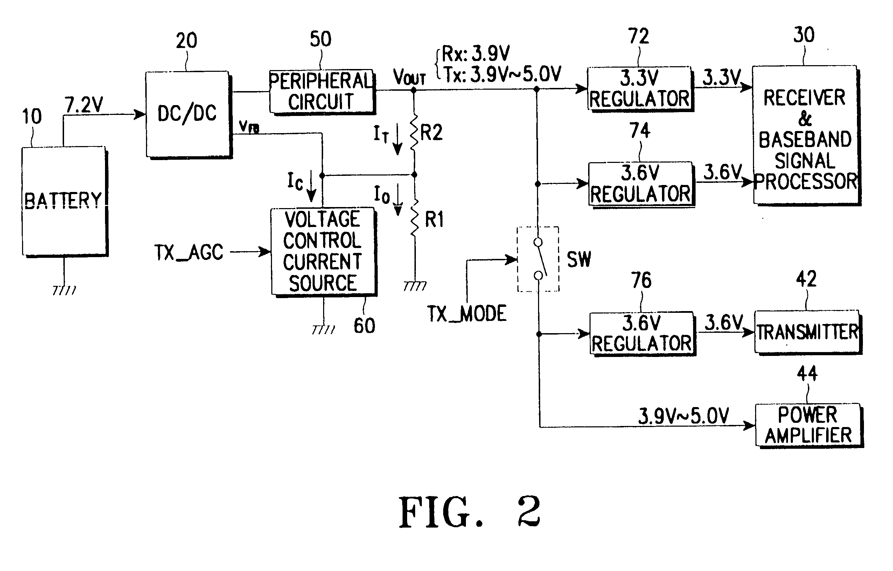

FIG. 2 illustrates a power supply apparatus for a mobile communication terminal according to an embodiment of the present invention. The power supply apparatus down-converts a DC voltage supplied from a rechargeable battery 10 and provides the down-converted DC voltage to respective elements of the mobile communication terminal. In contrast to the conventional one, the novel power supply apparatus employs a single DC/DC converter 20, thereby contributing to a reduction in size of the overall mobile communication terminal.

Furthermore, the power supply apparatus of the invention maximizes a power efficiency of the mobile communication terminal by adaptively controlling the power supply voltage. Conventionally, in a transmission mode, the power supply apparatus provides a constant DC voltage 5V to a receiver and baseband signal processor 30, a transmitter 42 and a power amplifier 44. Accordingly, regulators which can normally operate even with a DC voltage 3.9V, may cause a unnecessary power consumption.

Meanwhile, a transmitter of a mobile communication terminal employing PSK (Phase Shift Keying) modulation uses a class A or class AB power amplifier for linear amplification. A power efficiency of such a linear power amplifier is abruptly decreased, as the output power becomes lower than a saturation output power. Supplying the constant DC voltage to this power amplifier may additionally decrease the power efficiency. For example, in an IS-95 CDMA communication terminal, a transmission power at an antenna port is controlled in the 82dB range between-50dBm and 32dBm. When a power amplifier with a saturation output power 32dBm outputs a power below 0dBm, the power efficiency is 10% at the most. In other words, for the saturation output power, it is preferable that the power amplifier should be provided with the DC voltage 5.0V as an operating voltage. However, when outputting the power below 0dBm, it is permissible to provide the power amplifier with a DC voltage lower than 5.0V as an operating voltage. In the light of this, the power supply apparatus according to the present invention adaptively varies the operating voltage from 3.9V to 5.0V in proportion to the output power in the transmission mode, instead of supplying the constant operating voltage 5.0V. As a result, when the transmission power is low, the power supply apparatus decreases the output voltage of the DC/DC converter 20 to reduce a relative voltage difference between the DC/DC converter 20 and respective regulators, and provides the power amplifier with a low voltage.

In FIG. 2, the battery 10 provides a DC voltage 7.2V. The DC/DC converter 20 has an input end, an output end and a feedback end. The input end receives the DC voltage from the battery 10, and the output end is connected to a peripheral circuit 50. Further, the feedback end outputs a constant DC voltage $V_{FB}$. A resistor R2 is connected between an output end of the peripheral circuit 50 and the feedback end of the DC/DC converter 20, and a resistor R1 is connected between the feedback end and the ground. A device suitable for use as the DC/DC converter 20 is available as model LTC1265 step-down DC/DC converter from Linear Technology Co. In this case, the DC/DC converter 20 outputs the DC voltage $V_{FB}$ of 1.25V at the feedback end. Accordingly, the DC/DC converter 20 outputs an output voltage $V_{OUT}$ determined by

$$V_{OUT} = V_{BF}(1 + R2/R1) = 1.25 \times (1 + R2/R1) \ [V] \ ...(1)$$

It can be understood from equation (1) that the output voltage $V_{OUT}$ depends on resistance of the resistors R1 and R2.

Moreover, between the feedback end of the DC/DC converter 20 and the ground, a voltage control current source 60 is connected in parallel with the resistor R1. The voltage control current source 60 receives a transmission automatic gain control (TX_AGC) voltage which is variable according to the transmission power, and controls a current $I_C$ depending on the received TX_AGC voltage. Variation of the current $I_C$ will change a current $I_T$ flowing through the resistor R2, thereby varying the output voltage $V_{OUT}$ of the DC/DC converter 20.

For convenience of explanation, it is assumed that the mobile communication terminal requires the output voltage $V_{OUT}$ of 3.9V in the reception mode and the output voltage $V_{OUT}$ of 3.9-5.0V in the transmission mode.

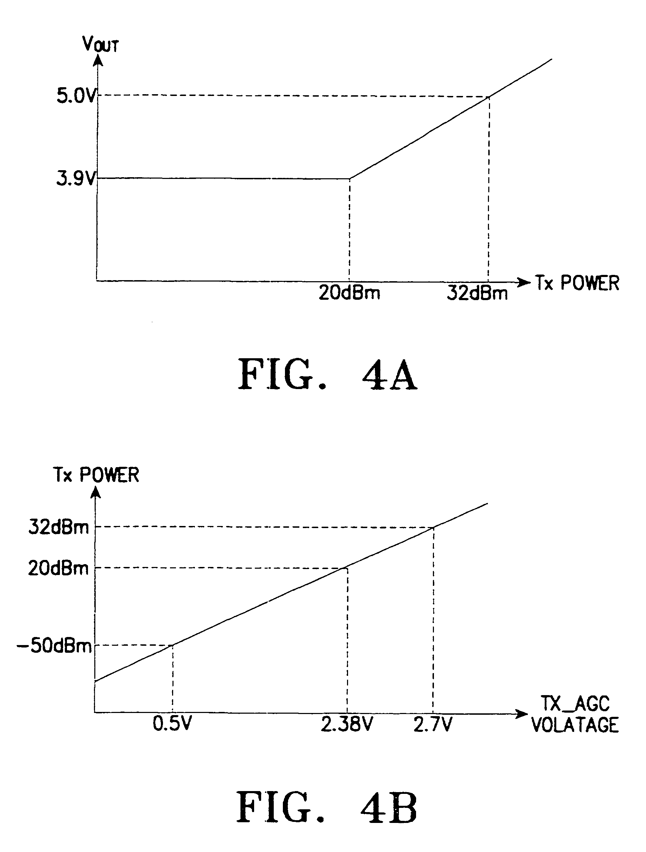

Now, referring to FIGs. 2 and 3, a detailed description will be given of how the power supply apparatus provides the mobile communication terminal with the constant DC voltage 3.9V in the reception mode and the variable DC voltage 3.9-5.0V in the transmission mode.

In the reception mode of the mobile communication terminal, the voltage $V_{OUT}$ of 3.9V is applied in common to voltage regulators 72 and 74. At the moment, a switch SW is turned off (or opened) in response to an inactivated transmission mode signal TX_MODE so that the output voltage $V_{OUT}$ may not be provided to a voltage regulator 76 and the power amplifier 44. The voltage regulators 72 and 74 regulate the voltage $V_{OUT}$ into DC voltages 3.3V and 3.6V, respectively and supply the regulated voltages to the receiver and baseband signal processor 30.

In the transmission mode of the mobile communication terminal, the output voltage $V_{OUT}$ of 3.9-5.0V is applied to the voltage regulator 76 and the power amplifier 44 as well as the voltage regulators 72 and 74, because the switch SW is turned on (or closed) in response to the activated transmission mode signal TX_MODE. The voltage regulator 76 regulates the voltage $V_{OUT}$ of 3.9-5.0V into a DC voltage 3.6V and provides the regulated DC voltage to the transmitter 42. Further, the voltage $V_{OUT}$ of 3.9-5.0V is supplied to the power amplifier 44 as an operating voltage, through the switch SW. That is, in the transmission mode, the voltage $V_{OUT}$ of 3.9-5.0V is supplied to the receiver and baseband signal processor 30, the transmitter 42 and the power amplifier 44.

Referring to FIG. 3, the voltage control current source 60 includes a transistor Q, being a switching element, which is switchable according to the received TX_AGC voltage. The transistor Q has a base connected to the TX_AGC voltage through a resistor R3, a collector connected to the feedback end of the DC/DC converter 20, and an emitter connected to the ground through a resistor R5. Between the base of the transistor Q and the ground, a resistor R4 and a capacitor C are connected in parallel to each other.

The TX_AGC voltage is zero in the reception mode, and increases in proportion to the transmission power in the transmission mode. In the IS-95 CDMA communication terminal, the transmission power at the antenna port is controlled in the 82dB range between -50dBm and 32dBm as shown in FIG. 4B, so that the TX_AGC voltage corresponding to this power range is 0.5-2.7V.

In the reception mode, the voltage control current source 60 receives the TX_AGC voltage of 0V, so that the transistor Q is turned off, thereby cutting off the collector current $I_C$ (i.e., $I_C$=0). At this moment, the output voltage $V_{OUT}$ of the DC/DC converter 20 is determined by equation (1).

In the transmission mode, the voltage control current source 60 receives the TX_AGC voltage which varies according to the transmission power as shown in FIG. 4B. If a base voltage $V_B$ increases to be higher by 0.7V or more than an emitter voltage $V_B$, the transistor Q is turned on. In this case, an emitter current $I_E$ is defined as

$$I_E = V_E/R5 \ [A] \ ...(2)$$

Since a base current is negligible, the collector current $I_C$ is substantially identical to the emitter current $I_B$. Thus, the collector current $I_C$ can be written as

$$I_C = V_E/R5 \ [A] \ ...(3)$$

When the TX_AGC voltage is $V_{AGC}$, the emitter voltage $V_E$ is defined as

$$V_E = \{V_{AGC} \times R4/(R3 + R4)\} - 0.7 \ [V] \ ...(4)$$

By substituting equation (4) for $V_E$ in equation (3), the collector current $I_C$ can be rewritten as

$$I_C = \{\{V_{AGC} \times R4/(R3+R4)\} - 0.7\}/R5 \ [A] \ ...(5)$$

It can be appreciated from equation (5) that the collector current $I_C$ of the transistor Q depends on the TX_AGC voltage $V_{AGC}$. Furthermore, in the transmission mode, the output voltage $V_{OUT}$ of the DC/DC converter 20 is the sum of the feedback voltage $V_{FB}$ and the voltage drop across the resistor R2, and can be represented by

$$V_{OUT} = V_{FB} + I_T \times R2 \ [V] \ ...(6)$$

Further, the current $I_T$ is the sum of the current $I_O$ and $I_C$ and can be written as

$$I_T = I_C + I_O = I_C + V_{FB}/R1 \ [A] \ ...(7)$$

If equation (7) is substituted for $I_T$ in equation (6), the voltage $V_{OUT}$ can be rewritten as

$$V_{OUT} = V_{FB} + (I_C + V_{FB}/R1) \times R2$$
$$= V_{FB} \times (1 + R2/R1) + I_C \times R2$$
$$= 1.25 \times (1 + R2/R1) + I_C \times R2 \ [V] \ ...(8)$$

As a result, it is apparent from equation (8) that the output voltage $V_{OUT}$ is function of the current $I_C$ which depends on the TX_AGC voltage $V_{AGC}$ as shown in equation (5). Therefore, when the TX_AGC voltage $V_{AGC}$ is low (i.e., when the transmission power is low), the output voltage $V_{OUT}$ of the DC/DC converter 20 is decreased. Accordingly, it is possible to reduce the power loss by the voltage regulators 72, 74 and 76 as well as the power consumption by the power amplifier 44 which usually takes the largest part of the power consumption in the mobile communication terminal. That is, unlike the conventional one, the novel power supply apparatus adaptively varies the output voltage of the DC/DC converter 20 according to the transmission power in the transmission mode, so that the power loss of the mobile communication terminal may be reduced thereby extending the battery life.

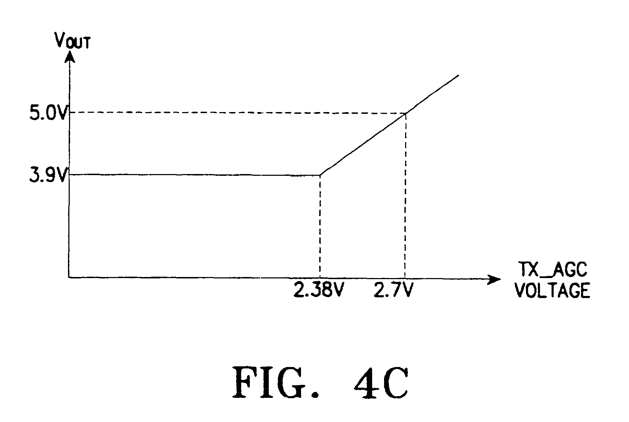

FIG. 4A illustrates the situation that the power supply apparatus of the invention varies the output voltage; $V_{OUT}$ of the DC/DC converter 20 according to a change of the transmission power. In the embodiment, the TX_AGC voltage $V_{AGC}$ is used to detect the change of the transmission power. FIG. 4C illustrates the situation that the power supply apparatus varies the output voltage $V_{OUT}$ of the DC/DC converter 20 according to a change of the TX_AGC voltage $V_{AGC}$.

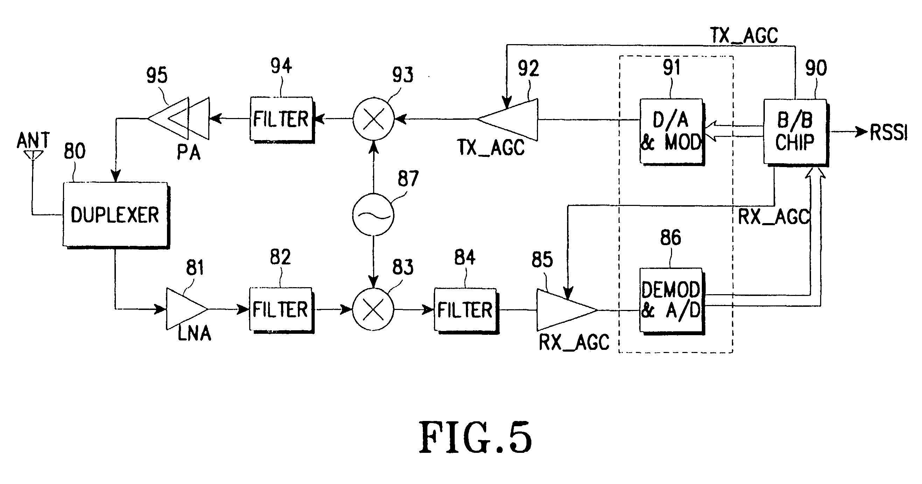

As mentioned above, to control the output voltage $V_{OUT}$ of the DC/DC converter 20 according to the transmission power, the power supply apparatus uses the TX_AGC voltage $V_{AGC}$, and this TX_AGC voltage $V_{AGC}$ is determined by a baseband (B/B) chip 90 shown in FIG. 5.

FIG. 5 illustrates an IS-95 CDMA communication terminal. In the specification, the detailed description of the respective elements will be avoided. Instead, the description will be given as to only how the baseband chip 90 determines the TX_AGC voltage.

In FIG. 5, the baseband chip 90 determines the TX_AGC voltage for controlling the transmission power and applies the determined TX_AGC voltage to a TX_AGC circuit 92. This power control operation may be divided into two operations. A first power control operation is an open loop power control operation which is performed in accessing a base station initially. In the open loop power control operation, the baseband chip 90 detects an RSSI (Received Signal Strength Indicator) value and determines a transmission power associated with the detected RSSI value. Here, the relationship between the transmission power TX_POWER and the received power RX_POWER is given by

$$TX\_POWER = -(RX\_POWER + 73) \ [dBm] \ ...(9)$$

A second power control operation is a closed loop control operation which is performed after the terminal is the connected to the base station by the first power control operation. In the closed loop control operation, the terminal receives a transmission power information command transferred from the base station and determines the TX_AGC voltage so as to output the transmission power corresponding to the transmission power information command.

As the TX_AGC voltage determined by the baseband chip 90 is applied to the voltage control current source 60, the power supply apparatus of the invention adaptively supplies the DC voltage $V_{OUT}$ according to the transmission power, in the transmission mode.

As described above, the novel power supply apparatus uses a single DC/DC converter and adaptively varies the output voltage of the DC/DC converter according to the transmission power in the transmission mode. Therefore, the power supply apparatus is favorable for a reduction.in size of the mobile communication termmal and for a reduction in power loss of the voltage regulators and the power amplifier, thereby maximizing the power efficiency and extending the battery life.

While the invention has been shown and described with reference to a certain preferred embodiment thereof, it will be understood by those skilled in the art that various changes in form and details may be made therein without departing from the scope of the invention as defined by the appended claims. For example, the voltage 3.9V in the reception mode and the voltage 3.9-5.0V in the transmission mode may be changed according to the type of the mobile communication terminals. Further, when a low-voltage battery is used, the down-converter may be replaced with an up-converter. Also, the transistor used for the voltage control current source may be replaced with any type of the switching element, such as a field effect transistor (FET). That is, the power supply apparatus according to the present invention can be applied to any of the CDMA, GSM and FM (Frequency Modulation) communication terminals.

## Claims

1. A method for controlling a power supply voltage in a mobile communication terminal including a receiver and base band signal processor (30), a transmitter (42), a transmission power amplifier (44), and a switch (SW) for switching between a reception mode and a transmission mode of the mobile communication terminal, comprising the steps of:

   a) supplying a DC voltage by a battery (10);
   b) converting, by a DC/DC converter (20), the DC voltage from the battery (10) to a constant DC voltage;
   and in the reception mode:
   c1) providing a reception mode output voltage at an output end of the DC/DC converter (20) depending on the constant DC voltage;
   c2) regulating the reception mode output voltage, and
   c3) supplying the regulated reception mode output voltage to the receiver and base band signal processor (30);
   and in the transmission mode:
   d1) providing a transmission mode output voltage at the output end of the DC/DC converter depending on the constant DC voltage as well as on a transmission automatic gain control AGC voltage determined according to a transmission output power; and
   d2) supplying the transmission mode output voltage to the receiver and base band signal processor (30), the transmitter (42) and the transmission power amplifier (44).

2. A method according to claim 1, wherein step d2) comprises the step of regulating the transmission mode output voltage for supplying a regulated transmission mode output voltage to the receiver and base band signal processor (30) and the transmitter (42).

3. A method according to claim 2, wherein in step c2), the reception mode output voltage is regulated to two regulated reception mode output voltages which are supplied in step c3) to the receiver and base band signal processor (30), and wherein in step d2), the transmission mode output voltage is regulated to three regulated transmission mode output voltages, and the first two regulated transmission mode output voltages are supplied to the receiver and base band signal processor (30), and the third regulated transmission mode output voltage is supplied to the transmitter (42).

4. A power supply apparatus for a mobile communication terminal including a receiver and base band signal processor (30), a transmitter (42) and a transmission power amplifier (44), the apparatus comprising:

   a battery (10) for supplying a DC voltage;
   a DC/DC converter (20) with an input end, an output end and a feedback end, for converting the DC voltage supplied from the battery (10) at the input end to a constant DC voltage and outputting the constant DC voltage at the feedback end;
a voltage control current source (60) connected between the feedback end and a ground, for adaptively varying in a transmission mode an output voltage at the output end of the DC/DC converter (20) according to a transmission automatic gain control AGC voltage determined according to a transmission output power;
regulation means for regulating the output voltage of the DC/DC converter (20) and supplying the regulated output voltage to the receiver and base band signal processor (30); and
a switch (SW) connected between the output end of the DC/DC converter (20) and the transmitter (42) and the power amplifier (44), being turned on during the transmission mode to transfer the output voltage of the DC/DC converter (20) to the transmitter (42) and the power amplifier (44).

5. A power supply apparatus according to claim 4, wherein the voltage regulation means comprise a first voltage regulator (72) and a second voltage regulator (74) for regulating the output voltage of the DC/DC converter (20) to a first and a second regulated output voltage and for supplying the first and the second regulated output voltage to the receiver and base band signal processor (30), and further comprising a third regulator (76) connected between the switch (SW) and the transmitter (42) for regulating the output voltage of the DC/DC converter (20) and supplying the third regulated output voltage to the transmitter (42).

6. A power supply apparatus according to claim 4 or 5, further comprising a first resistor (R2) connected between the output end and the feedback end of the DC/DC converter (20), and a second resistor (R1) connected between the feedback and the ground, and wherein the voltage control current source (60) adaptively varies the output voltage at the output end of the DC/DC converter (20) by varying a current flowing through the first resistor (R2) according to the transmission AGC voltage in the transmission mode.

7. A power supply apparatus according to claim 6, wherein in a reception mode, said voltage control current source (60) flows a first current through the first resistor (R2) so as to output a first output voltage at the output end determined by a DC voltage at the feedback end and a voltage drop across the first resistor (R2); wherein in the transmission mode, said voltage control current source (60) flows a second current equal to or higher than the first current (R2) through the first resistor so as to output a second output voltage at the output end, said second output voltage being a variable voltage equal to or higher than the first output voltage.

8. A power supply apparatus according to claim 6, wherein said power control current source (60) comprises:

an input end for receiving the transmission AGC voltage determined according to the transmission power; and
a switching element (Q) which is turned on to form a current path between the feedback end and the ground when the transmission AGC voltage has a predetermined value, thereby increasing the current flowing through the first resistor (R2).

9. A power supply apparatus according to claim 8, wherein said switching element (Q) is a transistor having a base connected to the input end, a collector connected to the feedback end and an emitter connected to the ground.

10. A power supply apparatus according to claim 9, further comprising:

a resistor (R2) connected between the input end and the base of the transistor (Q); and
a resistor (R4) connected between the base and the ground.

**Patentansprüche**

1. Verfahren zum Steuern einer Energieversorgungsspannung in einem Mobilkommunikations-Endgerät, das einen Empfänger und einen Basisband-Signalprozessor (30), einen Sender (42), einen Sendeleistungsverstärker (44) und einen Schalter (SW) zum Umschalten zwischen einem Empfangsmodus und einem Sendemodus des Mobilkommunikations-Endgerätes enthält, wobei es die folgenden Schritte umfasst:

a) Zuführen einer Gleichspannung mittels einer Batterie (10);
b) Umwandeln der Gleichspannung von der Batterie (10) in eine konstante Gleichspannung mittels eines Gleichstromwandlers (20);
und in dem Empfangsmodus:
c1) Bereitstellen einer Empfangsmodus-Ausgangsspannung an einem Ausgangsende des Gleichstromwandlers (20) in Abhängigkeit von der konstanten Gleichspannung;

c2) Regulieren der Empfangsmodus-Ausgangsspannung, und

c3) Zuführen der regulierten Empfangsmodus-Ausgangsspannung zu dem Empfänger und dem Basisband-Signalprozessor (30);

und in dem Sendemodus

d1) Bereitstellen einer Sendemodus-Ausgangsspannung an dem Ausgangsende des Gleichstromwandlers in Abhängigkeit von der konstanten Gleichspannung sowie von einer Spannung der automatischen Sende-Verstärkungsregelung, die entsprechend einer Sende-Ausgangsleistung bestimmt wird; und

d2) Zuführen der Sendemodus-Ausgangsspannung zu dem Empfänger und dem Basisband-Signalprozessor (30), dem Sender (42) und dem Sendeleistungsverstärker (44).

2. Verfahren nach Anspruch 1, wobei Schritt d2) den Schritt des Regulierens der Sendemodus-Ausgangsspannung umfasst, um dem Empfänger und dem Basisband-Signalprozessor (30) sowie dem Sender (42) eine regulierte Sendemodus-Ausgangsspannung zuzuführen.

3. Verfahren nach Anspruch 2, wobei in Schritt c2) die Empfangsmodus-Ausgangsspannung auf zwei regulierte Empfangsmodus-Ausgangsspannungen reguliert wird, die in Schritt c3) dem Empfänger und dem Basisband-Signalprozessor (30) zugeführt werden, und in Schritt d2) die Sendemodus-Ausgangsspannung auf drei regulierte Sendemodus-Ausgangsspannungen reguliert wird, die ersten zwei regulierten Sendemodus-Ausgangsspannungen dem Empfänger sowie dem Basisband-Signalprozessor (30) zugeführt werden und die dritte regulierte Sendemodus-Ausgangsspannung dem Sender (42) zugeführt wird.

4. Energieversorgungsvorrichtung für ein Mobilkommunikations-Endgerät, das einen Empfänger und einen Basisband-Signalprozessor (30), einen Sender (42) und einen Sendeleistungsverstärker (44) enthält, wobei die Vorrichtung umfasst:

eine Batterie (10) zum Zuführen einer Gleichspannung;

einen Gleichstromwandler (20) mit einem Eingangsende, einem Ausgangsende und einem Rückführungsende zum Umwandeln der von der Batterie (10) am Eingangsende zugeführten Gleichspannung in eine konstante Gleichspannung und zum Ausgeben der konstanten Gleichspannung an dem Rückführungsende;

eine Spannungssteuerungs-Stromquelle (60), die zwischen das Rückführungsende und eine Erde geschaltet ist, um in einem Sendemodus eine Ausgangsspannung an dem Ausgangsende des Gleichstromwandlers (20) entsprechend einer Spannung einer automatischen Sende-Verstärkungsregelung, die entsprechend einer Sende-Ausgangsleistung bestimmt wird, adaptiv zu ändern;

eine Reguliereinrichtung zum Regulieren der Ausgangsspannung des Gleichstromwandlers (20) und zum Zuführen der regulierten Ausgangsspannung zu dem Empfänger und dem Basisband-Signalprozessor (30); und

einen Schalter (SW), der zwischen das Ausgangsende des Gleichstromwandlers (20) und den Sender (42) sowie den Leistungsverstärker (44) geschaltet ist und während des Sendemodus geschlossen ist, um die Ausgangsspannung des Gleichstromwandlers (20) zu dem Sender (42) und dem Leistungsverstärker (44) zu übertragen.

5. Energieversorgungszuführvorrichtung nach Anspruch 4, wobei die Spannungsreguliereinrichtung einen ersten Spannungsregler (72) sowie einen zweiten Spannungsregler (74) zum Regulieren der Ausgangsspannung des Gleichstromwandlers (20) auf eine erste und eine zweite regulierte Ausgangsspannung und zum Zuführen der ersten sowie der zweiten regulierten Ausgangsspannung zu dem Empfänger und dem Basisband-Signalprozessor (30) umfasst, und des Weiteren einen dritten Regler (76) umfasst, der zwischen den Schalter (SW) und den Sender (42) geschaltet ist, um die Ausgangsspannung des Gleichstromwandlers (20) zu regulieren und die dritte regulierte Ausgangsspannung dem Sender (42) zuzuführen.

6. Energieversorgungsvorrichtung nach Anspruch 4 oder 5, die des Weiteren einen ersten Widerstand (R2), der zwischen das Ausgangsende und das Rückführungsende des Gleichstromwandlers (20) geschaltet ist, sowie einen zweiten Widerstand (R1) umfasst, der zwischen das Rückführungsende und die Erde geschaltet ist, und wobei die Spannungssteuer-Stromquelle (60) die Ausgangsspannung an dem Ausgangsende des Gleichstromwandlers (20) adaptiv ändert, indem sie einen durch den ersten Widerstand (R2) fließenden Strom entsprechend der Spannung der automatischen Sende-Verstärkungssteuerung in dem Sendemodus ändert.

7. Energieversorgungsvorrichtung nach Anspruch 6, wobei in einem Empfangsmodus die Spannungssteuer-Sromquelle (60) einen ersten Strom durch den ersten Widerstand (R2) leitet, um eine erste Ausgangsspannung an dem Ausgangsende auszugeben, die durch eine Gleichspannung an dem Rückführungsende und ein Spannungsgefälle über den ersten Widerstand (R2) bestimmt wird; und wobei in dem Sendemodus die Spannungssteuer-Stromquelle (60) einen zweiten Strom, der dem ersten Strom (R2) gleich ist oder höher als dieser, durch den ersten Widerstand leitet, um eine zweite Ausgangsspannung an dem Ausgangsende auszugeben, wobei die zweite Ausgangsspannung eine veränderliche Spannung ist, die der ersten Ausgangsspannung gleich ist oder höher als diese.

**8.** Energieversorgungsvorrichtung nach Anspruch 6, wobei die Spannungssteuer-Stromquelle (60) umfasst:

ein Eingangsende zum Empfangen der Spannung der automatischen Sende-Verstärkungsregelung, die entsprechend der Sendeleistung bestimmt wird; und

ein Schaltelement (Q), das geschlossen wird, um einen Stromweg zwischen dem Rückführungsende und der Erde herzustellen, wenn die Spannung der automatischen Sende-Verstärkungsregelung einen vorgegebenen Wert hat, um so den Strom zu erhöhen, der durch den ersten Widerstand (R2) fließt.

**9.** Energiezuführvorrichtung nach Anspruch 8, wobei das Schaltelement (Q) ein Transistor ist, der eine Basis, die mit dem Eingangsende verbunden ist, einen Kollektor, der mit dem Rückführungsende verbunden ist, und einen Emitter hat, der mit der Erde verbunden ist.

**10.** Energiezuführvorrichtung nach Anspruch 9, die des Weiteren umfasst:

einen Widerstand (R2), der zwischen das Eingangsende und die Basis des Transistors (Q) geschaltet ist; und einen Widerstand (R4), der zwischen die Basis und die Erde geschaltet ist.

## Revendications

**1.** Procédé pour commander une tension d'alimentation dans un terminal de communications mobiles comprenant un récepteur et un processeur de signal de bande de base (30), un émetteur (42), un amplificateur de puissance d'émission (44) et un commutateur (SW) pour effectuer une commutation entre un mode de réception et un mode d'émission du terminal de communications mobiles, comprenant les étapes consistant à :

a) délivrer une tension continue à l'aide d'une pile ou batterie (10) ;
b) convertir, à l'aide d'un convertisseur courant continu/courant continu (20) la tension continue venant de la pile ou batterie (10) en une tension continue constante ;
et, dans le mode de réception :
c1) délivrer une tension de sortie de mode de réception à une extrémité de sortie du convertisseur courant continu/courant continu (20) en fonction de la tension continue constante ;
c2) réguler la tension de sortie de mode de réception ; et
c3) délivrer la tension de sortie de mode de réception régulée au récepteur et au processeur de signal de bande de base (30) ;
et, dans le mode d'émission ;
d1) délivrer la tension de sortie de mode d'émission à l'extrémité de sortie du convertisseur courant continu/ courant continu en fonction de la tension continue constante, et, également, d'une tension de commande automatique du gain (AGC) d'émission déterminée en fonction d'une puissance de sortie d'émission ; et
d2) délivrer la tension de sortie du mode d'émission au récepteur et au processeur de signal de bande de base (30), à l'émetteur (42) et à l'amplificateur de puissance d'émission (44).

**2.** Procédé selon la revendication 1, dans lequel l'étape d2) comprend l'étape consistant à réguler la tension de sortie de mode d'émission pour délivrer une tension de sortie de mode d'émission régulée au récepteur et au processeur de signal de bande de base (30) et à l'émetteur (42).

**3.** Procédé selon la revendication 2, dans lequel, dans l'étape c2), la tension de sortie de mode de réception est régulée à deux tensions de sortie de mode de réception régulées qui sont délivrées dans l'étape c3) au récepteur et au processeur de signal de bande de base (30), et dans lequel, dans l'étape d2), la tension de sortie de mode d'émission est régulée à trois tensions de sortie de mode d'émission régulées, et les deux premières tensions de sortie de mode d'émission régulées sont délivrées au récepteur et au processeur de signal de bande de base (30), et la troisième tension de sortie de mode d'émission régulée est délivrée à l'émetteur (42).

4. Dispositif d'alimentation pour un terminal de communications mobiles comprenant un récepteur et un processeur de signal de bande de base (30), un émetteur (42) et un amplificateur de puissance d'émission (44), le dispositif comprenant :

une pile ou batterie (10) pour délivrer une tension continue ;
un convertisseur courant continu/courant continu (20) avec une extrémité d'entrée, une extrémité de sortie et une extrémité de rétroaction, pour convertir la tension continue délivrée à partir de la pile ou batterie (10) à l'extrémité d'entrée en une tension continue constante et délivrer en sortie la tension continue constante à l'extrémité de rétroaction ;
une source de courant de commande de tension (60) connectée entre l'extrémité de rétroaction et une masse, pour faire varier de façon adaptative dans un mode d'émission une tension de sortie à l'extrémité de sortie du convertisseur courant continu/courant continu (20) en fonction d'une tension de commande automatique du gain (AGC) d'émission déterminée en fonction d'une puissance de sortie d'émission ;
des moyens de régulation pour réguler la tension de sortie du convertisseur courant continu/courant continu (20) et délivrer la tension de sortie régulée au récepteur et au processeur de signal de bande de base (30) ; et
un commutateur (SW) connecté entre l'extrémité de sortie du convertisseur courant continu/courant continu (20) et l'émetteur (42) et l'amplificateur de puissance (44), qui est mis en service durant le mode d'émission pour transférer la tension de sortie du convertisseur courant continu/courant continu (20) à l'émetteur (42) et à l'amplificateur de puissance (44).

5. Dispositif d'alimentation selon la revendication 4, dans lequel les moyens de régulation de tension comprennent un premier régulateur de tension (72) et un deuxième régulateur de tension (74) pour réguler la tension de sortie du convertisseur courant continu/courant continu (20) à une première et une deuxième tensions de sortie régulées et pour délivrer la première et la deuxième tensions de sortie régulées au récepteur et au processeur de signal de bande de base (30), et comprenant de plus un troisième régulateur (76) connecté entre le commutateur (SW) et l'émetteur (42) pour réguler la tension de sortie du convertisseur courant continu/courant continu (20) et délivrer la troisième tension de sortie régulée à l'émetteur (42).

6. Dispositif d'alimentation selon la revendication 4 ou 5, comprenant de plus une première résistance (R2) connectée entre l'extrémité de sortie et l'extrémité de rétroaction du convertisseur courant continu/courant continu (20), et une deuxième résistance (R1) connectée entre la rétroaction et la masse, et dans lequel la source de courant de commande de tension (60) fait varier de façon adaptative la tension de sortie à l'extrémité de sortie du convertisseur courant continu/courant continu (20) en faisant varier un courant circulant à travers la première résistance (R2) en fonction de la tension de commande automatique du gain d'émission dans le mode d'émission.

7. Dispositif d'alimentation selon la revendication 6, dans lequel, dans un mode de réception, ladite source de courant de commande de tension (60) fait circuler un premier courant à travers la première résistance (R2) de façon à délivrer en sortie une première tension de sortie à l'extrémité de sortie, déterminée par une tension continue à l'extrémité de rétroaction et une chute de tension aux bornes de la première résistance (R2) ; dans lequel, dans le mode d'émission, ladite source de courant de commande de tension (60) fait circuler un deuxième courant supérieur ou égal au premier courant (R2) à travers la première résistance de façon à délivrer en sortie une deuxième tension de sortie à l'extrémité de sortie, ladite deuxième tension de sortie étant une tension variable supérieure ou égale à la première tension de sortie.

8. Dispositif d'alimentation selon la revendication 6, dans lequel ladite source de courant de commande de puissance (60) comprend :

une extrémité d'entrée pour recevoir la tension de commande automatique du gain d'émission déterminée en fonction de la puissance d'émission ; et
un élément de commutation (Q) qui est mis en service pour former un trajet de courant entre l'extrémité de rétroaction et la masse lorsque la tension de commande automatique du gain d'émission a une valeur prédéterminée, de façon à accroître ainsi le courant circulant à travers la première résistance (R2).

9. Dispositif d'alimentation selon la revendication 8, dans lequel ledit élément de commutation (Q) est un transistor ayant une base connectée à l'extrémité d'entrée, un collecteur connecté à l'extrémité de rétroaction et un émetteur connecté à la masse.

10. Dispositif d'alimentation selon la revendication 9, comprenant de plus :

une résistance (R2) connectée entre l'extrémité d'entrée et la base du transistor (Q) ; et
une résistance (R4) connectée entre la base et la masse.

**FIG. 1**

**FIG. 3**

FIG. 2

FIG. 4A

FIG. 4B

FIG. 4C

**FIG.5**